(19) Europäisches Patentamt / European Patent Office / Office européen des brevets

(11) **EP 4 502 542 B1**

(12) **EUROPEAN PATENT SPECIFICATION**

(45) Date of publication and mention
of the grant of the patent:
**06.05.2026 Bulletin 2026/19**

(21) Application number: **23777796.6**

(22) Date of filing: **10.03.2023**

(51) International Patent Classification (IPC):
*G01C 21/34* (2006.01)   *G05D 1/628* (2024.01)
*G08G 1/16* (2006.01)   *B60W 60/00* (2020.01)
*B60W 30/095* (2012.01)   *B60W 30/09* (2012.01)
*B60W 30/12* (2020.01)

(52) Cooperative Patent Classification (CPC):
**G01C 21/3446; B60W 30/09; B60W 30/12;
G01C 21/3461; G08G 1/165; G08G 1/167;**
B60W 2552/53; B60W 2754/20; Y02T 10/40

(86) International application number:
**PCT/CN2023/080833**

(87) International publication number:
**WO 2023/185419 (05.10.2023 Gazette 2023/40)**

(54) **PATH PLANNING METHOD AND APPARATUS AND STORAGE MEDIUM**

WEGPLANUNGSVERFAHREN UND -VORRICHTUNG UND SPEICHERMEDIUM

PROCÉDÉ ET APPAREIL DE PLANIFICATION DE TRAJET ET SUPPORT DE STOCKAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.03.2022 CN 202210320488**

(43) Date of publication of application:
**05.02.2025 Bulletin 2025/06**

(73) Proprietor: **Ningbo Lotus Robotics Co., Ltd.
Ningbo, Zhejiang 315335 (CN)**

(72) Inventor: **LI, Changchun
Wuhan, Hubei 430056 (CN)**

(74) Representative: **Barker Brettell LLP
100 Hagley Road
Edgbaston
Birmingham B16 8QQ (GB)**

(56) References cited:
CN-A- 112 506 176   CN-A- 113 031 583
CN-A- 113 124 891   CN-A- 113 124 891
CN-A- 114 115 268   CN-A- 114 923 496
GB-A- 2 597 914   US-A1- 2020 385 017

**Description**

**TECHNICAL FIELD**

The invention relates to the field of intelligent transportation, in particular to a path planning method, a path planning apparatus, an electronic device and a storage medium.

**BACKGROUND**

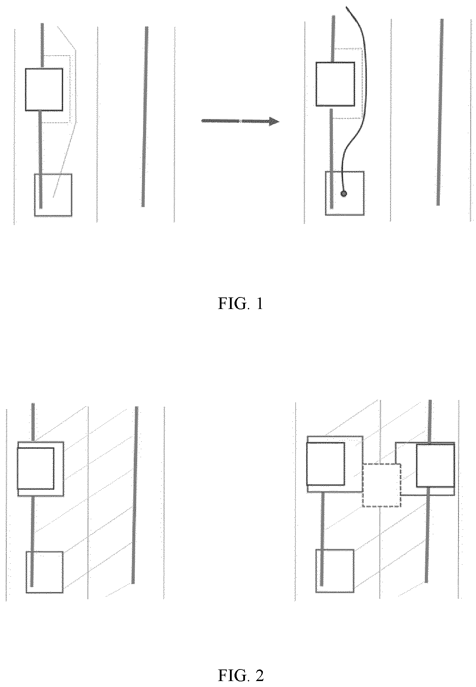

At present, there are three main types of path planning manners in mainstream: graph search, sampling, and numerical optimization, with different advantages and disadvantages. The graph search can ensure that a searched-out path is optimal, and the numerical optimization can provide a good guarantee of a smooth path. Referring to FIG. 1, a path planning method in the prior art is usually that: a self-driving vehicle firstly searches for a reference path having no collision with an obstacle in a hard boundary, where this path will be in an expected safe travelling corridor and close to a lane center-line of the current lane as much as possible by designing a cost function; a path meeting a vehicle dynamics constraint is then planned in the hard boundary based on the reference path by means of the numerical optimization; and finally the vehicle travels following the planned path.

For the self-driving vehicle, the vehicle needs to plan a safe and collision-free path that meets a vehicle kinematic constraint. Referring to the left of FIG. 2, a current common practice to ensure a path collision-free with an obstacle is to solve such problem through obstacle inflation, and determination on a direction for avoiding the obstacle depends on a rule decision. Referring to the right of FIG. 2, inflation with a fixed size for the obstacle makes it impossible for the self-driving vehicle to plan a path when a travelling space is narrow, and the rule-based determination cannot effectively and correctly calculate directions for avoiding multiple obstacles.

CN113124891A discloses a driving path planning method, which includes: obtaining a starting point S, an ending point E, and an obstacle set; the obstacle set contains all obstacles within the effective traffic area; connecting the starting point S and the ending point E to generate a vector SE; when the distance from any obstacle in the obstacle set to the vector SE is less than the traffic width, generating two path points on both sides of each obstacle in the obstacle set perpendicular to the direction of the vector SE; and obtaining the driving path according to the two path points corresponding to each obstacle in the obstacle set, the starting point S, and the ending point E in the direction of the vector SE.

US2020385017A1 discloses a vehicle control device, which includes an obstacle recognizer configured to recognize an obstacle which is located near a vehicle and a target trajectory generator configured to generate a target trajectory in which the vehicle is to travel repeatedly with a predetermined cycle, where the target trajectory generator is configured to generate the target trajectory such that a first change which is an amount of change in a road width direction from the target trajectory which is generated in a previous cycle during repeated execution and a second change which is an amount of change of a direction with respect to a direction directed from the vehicle to a point a predetermined distance away on the target trajectory between the previous cycle and a current cycle are decreased.

**SUMMARY**

In view of the above-mentioned shortcomings of the prior art, a purpose of the present application is to solve the problem that a self-driving vehicle cannot plan a path when a travelling space is narrow, and cannot effectively avoid multiple obstacles. The invention is set out in the appended set of claims.

In order to solve the above technical problem, the present invention provides a path planning method, a path planning apparatus, an electronic device and a storage medium. Solutions are as follows.

In one aspect, a path planning method is provided, including:

projecting information on lane lines, information on a lane center-line and information on an obstacle contour into a target coordinate system to obtain projection information;
determining a start point and an end point of path planning in the target coordinate system, and if it is determined based on the projection information that there is an obstacle between the start point and the end point, then performing sampling on both sides of the obstacle contour along a travelling direction of a vehicle to obtain sampling points;
determining a plurality of paths based on the start point, the end point and the sampling points;
performing a cost calculation on the plurality of paths, and determining a reference path in the plurality of paths based on results of the cost calculation, where the results of the cost calculation characterize degrees to which the paths are close to the lane center-line in a case of avoiding the obstacle; and
determining a target planned path based on the reference path.

Optionally, performing the sampling on both sides of the obstacle contour along the travelling direction of the vehicle to obtain the sampling points includes:

determining a sampling distance on both sides of the obstacle contour along the travelling direction of the vehicle, where the sampling distance is a sum of half a width of the vehicle and a safety distance, and the safety distance is a preset distance between the vehicle and the obstacle contour; and
performing sampling based on the sampling distance to obtain the sampling points.

Optionally, the sampling points include a valid sampling point and an invalid sampling point, where the valid sampling point is located within the lane lines, and the invalid sampling point is located outside the lane lines.

Optionally, the method further includes:

if all the sampling points are invalid sampling points, then taking a point of intersection between a lower boundary of the obstacle contour and the lane center-line as a final sampling point; and
taking the final sampling point as the end point.

According to the invention, performing the cost calculation on the plurality of paths, and determining the reference path in the plurality of paths based on the results of the cost calculation include:

for each path of the plurality of paths, determining a first distance between a point on the path and the lane center-line, and a second distance between the point on the path and the obstacle contour, and determining a result of the cost calculation corresponding to the path according to the first distance, the second distance and a smooth-property value of the path; and
comparing the results of the cost calculation corresponding to the paths, and determining a path of which the result of the cost calculation is minimal as the reference path.

According to the invention, determining the result of the cost calculation corresponding to the path according to the first distance, the second distance and the smooth-property value of the path includes:

for each point on the path, obtaining a first calculation result based on a product of the first distance corresponding to the point and a first coefficient, and obtaining a second calculation result based on a product of the second distance corresponding to the point and a second coefficient;
performing a linear fusion based on the first coefficient and the second coefficient to obtain a third coefficient, and obtaining a third calculation result based on a product of the smooth-property value of the path and the third coefficient;
summing the first calculation result, the second calculation result and the third calculation result corresponding to each point on the path to obtain a first summing result; and
adjusting the first coefficient and the second coefficient based on the first summing result, and in a case that the second distance between each point on the path and the obstacle contour is not less than a safety distance, determining the result of the cost calculation corresponding to the path.

Optionally, the method further includes:
if it is determined based on the projection information that there is no obstacle between the start point and the end point, then determining the lane center-line as the reference path.

In another aspect, a path planning apparatus is provided, including:

a projecting module, configured to project information on lane lines, information on a lane center-line and information on an obstacle contour into a target coordinate system to obtain projection information;
a sampling module, configured to determine a start point and an end point of path planning in the target coordinate system, and if it is determined based on the projection information that there is an obstacle between the start point and the end point, then perform sampling on both sides of the obstacle contour along a travelling direction of a vehicle to obtain sampling points;
a planning module, configured to determine a plurality of paths based on the start point, the end point and the sampling points;
a cost calculating module, configured to perform a cost calculation on the plurality of paths, and determine a reference path in the plurality of paths based on results of the cost calculation, where the results of the cost calculation characterize degrees to which the paths are close to the lane center-line in a case of avoiding the obstacle; and
an optimizing module, configured to determine a target planned path based on the reference path.

Optionally, the sampling module includes:

a sampling-distance determining unit, configured to determine a sampling distance on both sides of the obstacle contour along the travelling direction of the vehicle, where the sampling distance is a sum of half a width of the vehicle and a safety distance, and the safety distance is a preset distance between the vehicle and the obstacle contour; and a sampling unit, configured to perform sampling based on the sampling distance to obtain the sampling points.

According to the invention, the cost calculating module includes:

a parameter determining module, configured to: for each path of the plurality of paths, determine a first distance between a point on the path and the lane center-line, and a second distance between the point on the path and the obstacle contour;

a calculating module, configured to: for each path of the plurality of paths, determine a result of the cost calculation corresponding to the path according to the first distance, the second distance and a smooth-property value of the path; and

a reference-path determining module, configured to compare the results of the cost calculation corresponding to the paths, and determine a path of which the result of the cost calculation is minimal as the reference path.

According to the invention, the calculating module includes:

a first calculating unit, configured to: for each point on the path, obtain a first calculation result based on a product of the first distance corresponding to the point and a first coefficient, and obtain a second calculation result based on a product of the second distance corresponding to the point and a second coefficient;

a second calculating unit, configured to perform a linear fusion based on the first coefficient and the second coefficient to obtain a third coefficient, and obtain a third calculation result based on a product of the smooth-property value of the path and the third coefficient;

a third calculating unit, configured to sum the first calculation result, the second calculation result and the third calculation result corresponding to each point on the path to obtain a first summing result; and

an adjusting unit, configured to adjust the first coefficient and the second coefficient based on the first summing result, and in a case that the second distance between each point on the path and the obstacle contour is not less than a safety distance, determine the result of the cost calculation corresponding to the path.

In another aspect, an electronic device is provided, including a processor and a memory, where at least one instruction or at least one program is stored in the memory, and the at least one instruction or the at least one program is loaded and executed by the processor to implement the steps of the method mentioned above.

In another aspect, a computer-readable storage medium, where at least one instruction or at least one program is stored in the computer-readable storage medium, and the at least one instruction or the at least one program is loaded and executed by a processor to implement the steps of the method mentioned above.

In another aspect, a computer program product or a computer program is provided. The computer program product or the computer program includes computer instructions, and the computer instructions are stored in a computer-readable storage medium. A processor of a computer device reads the computer instructions from the computer-readable storage medium, and the processor executes the computer instructions to cause the computer device to execute the steps of the method mentioned above.

By using the above technical solutions, the present invention has the following beneficial effects:

by performing the sampling on both sides of the obstacle to replace a method of discretizing an entire search space to determine a path in a traditional search algorithm, and by performing the cost calculation to obtain the reference path and performing a smooth design on the reference path, a sampling space is simplified, and real-time performance of search algorithm is improved, realizing that a self-driving vehicle can correctly plan a path and effectively and reasonably avoid multiple obstacles in a narrow travelling space with ensured optimality and smoothness of the path.

Other features and advantages of the present invention will be described in detail in the following description of embodiments.

## BRIEF DESCRIPTION OF DRAWINGS

To illustrate the technical solutions in embodiments of the present invention more clearly, the following briefly introduces accompanying drawings required for describing the embodiments. Apparently, the accompanying drawings in the following description are only some embodiments of the present invention, and same reference signs generally represent same components. For those of ordinary skill in the art, other drawings can also be obtained according to these drawings without creative efforts.

FIG. 1 is a schematic diagram of a path planning method in the prior art.

FIG. 2 is a schematic diagram of a path planning method with an existing technical problem in the prior art.

FIG. 3 is a schematic flowchart of a path planning method provided in an embodiment of the present invention.

FIG. 4 is a schematic diagram of sampling points in an optional method of path planning methods provided in embodiments of the present invention.

FIG. 5 is a schematic diagram of an invalid sampling point in an optional method of path planning methods provided in embodiments of the present invention.

FIG. 6 is a schematic diagram of determining a plurality of paths based on a start point, an end point and sampling points in a path planning method provided in an embodiment of the present invention.

FIG. 7 is a schematic structural diagram of a path planning apparatus provided in an embodiment of the present invention.

FIG. 8 is a schematic diagram of a hardware structure of a server running a path planning method provided in an embodiment of the present invention.

## DESCRIPTION OF EMBODIMENTS

In the following, parts of the description and drawings referring to embodiments, which are not covered by the claims, are not presented as embodiments of the invention, but are used for understanding the invention. The following clearly and completely describes the technical solutions in embodiments of the present invention with reference to accompanying drawings in embodiments of the present invention. Obviously, the described embodiments are only a part of embodiments of the present invention, rather than all embodiments.

The "one embodiment" or "an embodiment" referred to herein refers to a particular feature, structure or characteristic that may be included in at least one implementation of the present invention. In the description of the present invention, it should be understood that an orientation or a positional relationship indicated by "upper", "lower", "top", "bottom" or other terms is based on an orientation or a positional relationship shown in the drawing, which is only for convenience of describing the present invention and simplifying the description, rather than indicating or implying that the indicated apparatus or element must have the specific orientation or must be constructed and operated in the specific orientation, and is therefore not to be construed as a limitation on the present invention. In addition, terms "first" and "second" are only used for a descriptive purpose, and cannot be understood as indicating or implying relative importance or implicitly indicating a quantity of indicated technical features. Therefore, a feature defined with "first" or "second" may explicitly or implicitly include one or more such features. Moreover, the terms "first", "second" and the like are used to distinguish similar objects, and are not necessarily used to describe a specific order or precedence. It should be understood that the terms used as such are interchangeable under appropriate circumstances, so that the embodiments of the present invention described herein can be implemented in an order other than those illustrated or described herein.

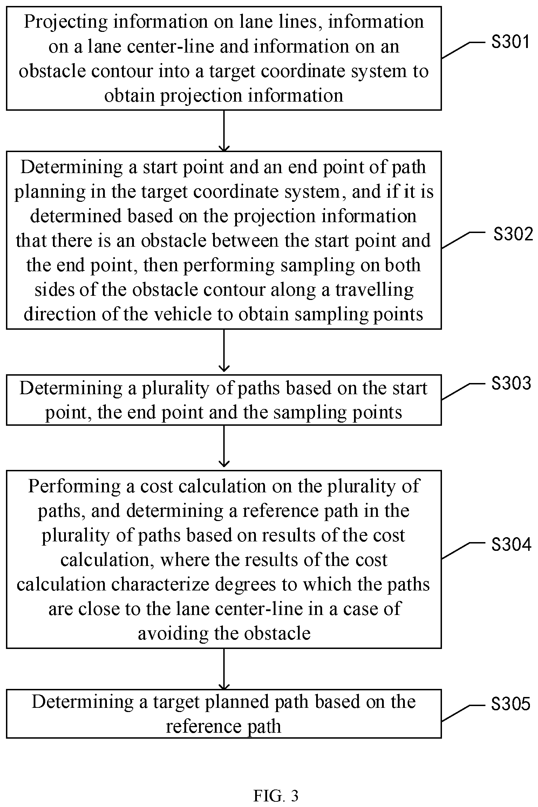

Referring to FIG. 3, a schematic flowchart of a path planning method provided in an embodiment of the present invention is shown. It should be noted that this specification provides operation steps of the method as described in the embodiment or the flowchart, but more or fewer operation steps may be included based on conventional or non-creative labor. The order of the steps enumerated in the embodiment is only one manner of a plurality of execution orders of steps, and does not represent a unique execution order. When an apparatus or a product in an actual system is used for execution, the order according to the method shown in the embodiment or the drawing may be followed for execution or parallel execution (for example, in an environment of parallel processors or multi-thread processing) may be performed. The path planning method provided in the embodiment of the present invention includes the following steps.

S301, projecting information on lane lines, information on a lane center-line and information on an obstacle contour into a target coordinate system to obtain projection information.

Specifically, a self-driving vehicle (hereinafter referred to as vehicle) receives map information and obstacle information when travelling. The map information includes the information on the lane lines and the information on the lane center-line, and the obstacle information includes the information on the obstacle contour. The information on the lane lines, the information on the lane center-line and the information on the obstacle contour are projected into the target coordinate system. In an embodiment of the present invention, the target coordinate system is a Frenet coordinate system. In the Frenet coordinate system, a lane center-line is taken as a reference line, and a tangent vector t and a normal vector n of the reference line are used to establish the coordinate system. The vehicle itself is taken as an origin. Coordinate axes are perpendicular to each other, and are divided into direction s (i.e. a direction along the reference line) and direction d (i.e. a current normal direction of the reference line). A trajectory of the vehicle which travels forward and is kept within the lane lines in the Frenet coordinate system is calculated as a straight line, and the obstacle information is projected into the coordinate system. Data is processed by dimension reduction, and the principle of obstacle inflation is used, which is to transform the vehicle into a mass point, and meanwhile to inflate the obstacle according to a volume of a robot, so that calculation amount is reduced, and difficulty in path planning is simplified.

S302, determining a start point and an end point of path planning in the target coordinate system, and if it is determined based on the projection information that there is an obstacle between the start point and the end point, then performing sampling on both sides of the obstacle contour along a travelling direction of the vehicle to obtain sampling points.

In a possible implementation, step S302 further includes the following steps:

(1) determining a sampling distance on both sides of the obstacle contour along the travelling direction of the vehicle, where the sampling distance is a sum of half a width of the vehicle and a safety distance, and the safety distance is a preset distance between the vehicle and the obstacle contour; and
(2) performing sampling based on the sampling distance to obtain the sampling points.

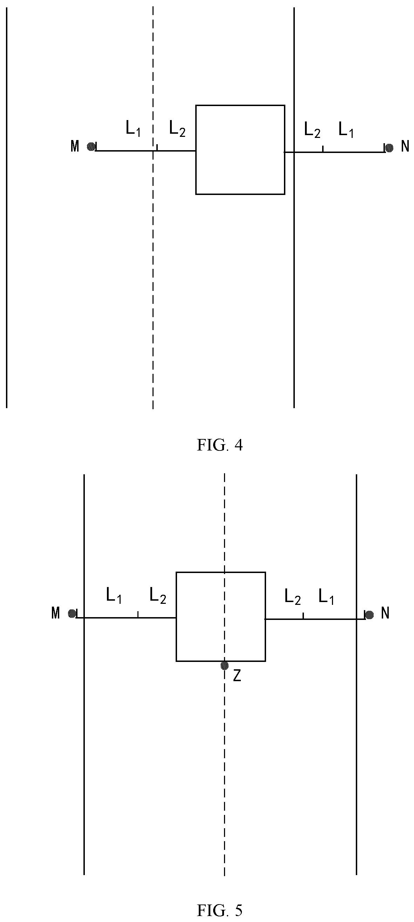

Specifically, referring to FIG. 4, solid lines on two sides are the lane lines, a dotted line in the middle is the lane center-line, and a rectangular box is the obstacle contour. If there is at least one obstacle between the start point and the end point, one sampling point is sampled on each of both sides of each obstacle contour. The sampling distance is the sum of half the width $L_1$ of the vehicle and the safety distance $L_2$. The safety distance $L_2$ is a preset parameter $D_{safe}$ for the vehicle, which is a minimum distance to ensure that the vehicle does not collide with an obstacle. Sampling on both sides of each obstacle can ensure that the vehicle effectively avoids the obstacle.

In a possible implementation, the sampling points include a valid sampling point and an invalid sampling point. The valid sampling point is located within the lane lines, and the invalid sampling point is located outside the lane lines. As shown in FIG. 4, point M is a valid sampling point, and point N is an invalid sampling point. If all the sampling points are invalid sampling points, referring to FIG. 5, then point Z of intersection between a lower boundary of the obstacle contour and the lane center-line is taken as a final sampling point, and the final sampling point is taken as the end point.

The valid sampling point is a node that a search algorithm needs to refer to in the following method steps, and the invalid sampling point is a node that the search algorithm does not refer to, that is, the path does not pass through the invalid sampling point. If all the sampling points are the invalid sampling points, the path is planned to arrive at the obstacle and then stopped. The lower boundary is a two-dimensional lower boundary of the obstacle contour perpendicular to the travelling direction of the vehicle in the Frenet coordinate system. In other words, it is impossible for the vehicle to avoid the obstacle within the lane lines, and the vehicle travels to the boundary of the obstacle contour and stops.

S303, determining a plurality of paths based on the start point, the end point and the sampling points.

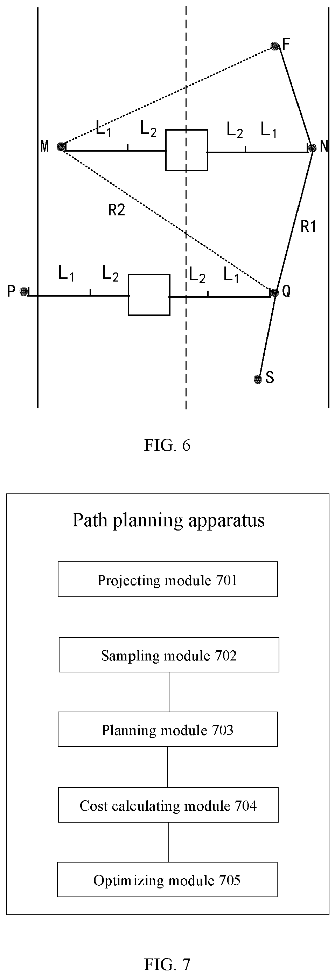

Referring to FIG. 6, in an embodiment, there are two obstacles in a travelling space. Point S is the start point, point F is the end point. Point M, point N and point Q are the valid sampling points, and point P is the invalid sampling point. The search algorithm is called to connect the start point S, the valid sampling point Q, the valid sampling point N and the end point F to form path R1, and to connect the start point S, the valid sampling point Q, the valid sampling point M and the end point F to form path R2. R1 and R2 are paths that do not collide with obstacles. The search algorithm is a graph search algorithm. The graph search algorithm has optimality, which theoretically ensures that a searched-out path is optimal and used as a possible path for the vehicle to travel.

S304, performing a cost calculation on the plurality of paths, and determining a reference path in the plurality of paths based on results of the cost calculation, where the results of the cost calculation characterize degrees to which the paths are close to the lane center-line in a case of avoiding the obstacle.

Specifically, by designing a cost function, the path searched out by the search algorithm will be within the lane lines and as close to the lane center-line of the current lane as possible. The smaller the result of the cost calculation is, the smaller the cost paid for making the path close to the lane center-line is.

According to the invention, step S304 further includes the following steps.

(1) For each path of the plurality of paths, determining a first distance between a point on the path and the lane center-line, and a second distance between the point on the path and the obstacle contour.
(2) Determining the result of the cost calculation corresponding to the path according to the first distance, the second distance and a smooth-property value of the path.

According to the invention, this step includes:

for each point on the path, obtaining a first calculation result based on a product of the first distance corresponding to the point and a first coefficient, and obtaining a second calculation result based on a product of the second distance corresponding to the point and a second coefficient;
performing a linear fusion based on the first coefficient and the second coefficient to obtain a third coefficient, and obtaining a third calculation result based on a product of the smooth-property value of the path and the third coefficient;
summing the first calculation result, the second calculation result and the third calculation result corresponding to each point on the path to obtain a first summing result; and
adjusting the first coefficient and the second coefficient based on the first summing result, and in a case that the second distance between each point on the path and the obstacle contour is not less than a safety distance, determining the result of the cost calculation corresponding to the path.

(3) Comparing the results of the cost calculation corresponding to the paths, and determining a path of which the result of the cost calculation is minimal as the reference path.

Specifically, in an embodiment of the present invention, path $R_A$ in the plurality of paths is taken as an example. Taking discrete points $A_1$, $A_2$, $A_3$, ... $A_n$ on the path $R_A$, the first distance g(x) between each point and the lane center-line, the second distance h(x) between each point and the obstacle contour, and the smooth-property value z(x) of each point, i.e. a slope of each point, are determined. An expression of the cost function is

$$f(x) = \alpha \sum_{i=0}^{n} g(x) + \beta \sum_{i=0}^{n} h(x) + (1 - \alpha - \beta) \sum_{i=0}^{n} z(x)$$, where $\alpha$ is the first coefficient, $\beta$ is the second

coefficient, and the third coefficient $(1-\alpha-\beta)$ is obtained from a linear fusion performed on the first coefficient and the second coefficient. The first distance g(x), the second distance h(x) and the smooth-property value z(x) of each point are correspondingly summed, and the first coefficient and the second coefficient are adjusted to make the path $R_A$ as close to the lane center-line as possible in a case that a distance between the path $R_A$ and the obstacle contour is not less than a safety distance $D_{safe}$. Here, the safety distance may be set according to data specified in a vehicle data manual. In an embodiment, if the vehicle can still avoid the obstacle when a distance between the vehicle and the obstacle contour is $0.8D_{safe}$, then the second coefficient can be adjusted to make h(x) not less than $0.8D_{safe}$. From this, results of the cost calculation for other paths are then determined. The results of the cost calculation for the paths are compared, and the path of which the result of the cost calculation is minimal is determined as the reference path for the path planning.

S305, determining a target planned path based on the reference path.

The lane lines are taken as a constraint boundary condition, and smoothing calculation is performed on the reference path by using numerical optimization, so that the reference path is as smooth as possible and meets a vehicle dynamics constraint. In a possible implementation, if it is determined based on the projection information that there is no obstacle between the start point and the end point, then the lane center-line is determined as the reference path. Specifically, taking point 1 closest to the start point and point 2 closest to the end point on the lane center-line, the start point, the point 1, the point 2 and the end point are connected as the reference path, and then the numerical optimization is performed on this reference path to make the path as smooth as possible.

Corresponding to the foregoing path planning method, an embodiment of the present invention further provides a path planning apparatus. Since the path planning apparatus provided in the embodiment of the present invention corresponds to the path planning method provided in the foregoing several embodiments, the foregoing implementations of the path planning method are also applicable to the path planning apparatus provided in this embodiment. Details are not described herein again in this embodiment of the present invention.

Referring to FIG. 7, a schematic structural diagram of a path planning apparatus provided in an embodiment of the present invention is shown. The apparatus has functions of implementing the path planning method in the above method embodiments. The functions may be implemented by hardware, or by hardware performing corresponding software. The apparatus may include:

a projecting module 701, configured to project information on lane lines, information on a lane center-line and information on an obstacle contour into a target coordinate system to obtain projection information;
a sampling module 702, configured to determine a start point and an end point of path planning in the target coordinate system, and if it is determined based on the projection information that there is an obstacle between the start point and the end point, then perform sampling on both sides of the obstacle contour along a travelling direction of a vehicle to obtain sampling points;
a planning module 703, configured to determine a plurality of paths based on the start point, the end point and the sampling points;
a cost calculating module 704, configured to perform a cost calculation on the plurality of paths, and determine a reference path in the plurality of paths based on results of the cost calculation, where the results of the cost calculation characterize degrees to which the paths are close to the lane center-line in a case of avoiding the obstacle; and
an optimizing module 705, configured to determine a target planned path based on the reference path.

Optionally, the sampling module 702 includes:

a sampling-distance determining unit, configured to determine a sampling distance on both sides of the obstacle contour along the travelling direction of the vehicle, where the sampling distance is a sum of half a width of the vehicle and a safety distance, and the safety distance is a preset distance between the vehicle and the obstacle contour; and
a sampling unit, configured to perform sampling based on the sampling distance to obtain the sampling points.

According to the invention, the cost calculating module 704 includes:

a parameter determining module, configured to: for each path of the plurality of paths, determine a first distance between a point on the path and the lane center-line, and a second distance between the point on the path and the obstacle contour;

a calculating module, configured to: for each path of the plurality of paths, determine a result of the cost calculation corresponding to the path according to the first distance, the second distance and a smooth-property value of the path; and

a reference-path determining module, configured to compare the results of the cost calculation corresponding to the paths, and determine a path of which the result of the cost calculation is minimal as the reference path.

According to the invention, the calculating module includes:

a first calculating unit, configured to: for each point on the path, obtain a first calculation result based on a product of the first distance corresponding to the point and a first coefficient, and obtain a second calculation result based on a product of the second distance corresponding to the point and a second coefficient;

a second calculating unit, configured to perform a linear fusion based on the first coefficient and the second coefficient to obtain a third coefficient, and obtain a third calculation result based on a product of the smooth-property value of the path and the third coefficient;

a third calculating unit, configured to sum the first calculation result, the second calculation result and the third calculation result corresponding to each point on the path to obtain a first summing result; and

an adjusting unit, configured to adjust the first coefficient and the second coefficient based on the first summing result, and in a case that the second distance between each point on the path and the obstacle contour is not less than a safety distance, determine the result of the cost calculation corresponding to the path.

It should be noted that, when implementing the functions of the apparatus provided in the foregoing embodiments, the division of the foregoing functional modules is only illustrated as an example. In an actual application, the foregoing functions may be allocated to different functional modules according to needs, that is, an internal structure of a device is divided into different functional modules to complete all or part of the functions described above. In addition, the apparatus provided in the foregoing embodiments belong to a same concept as the method embodiments. For specific implementation processes, please refer to the method embodiments, which will not be repeated here.

An embodiment of the present invention further provides an electronic device, including a processor and a memory, where at least one instruction or at least one program is stored in the memory, and the at least one instruction or the at least one program is loaded and executed by the processor to implement the steps of the path planning method mentioned above.

The memory may be configured to store a software program and a module, and the processor executes various functional applications by running the software program and the module that are stored in the memory. The memory may mainly include a program storage area and a data storage area, where the program storage area may store an operating system, an application program required for a function, and the like, and the data storage area may store data created according to use of the device, etc. In addition, the memory may include a high-speed random access memory, and may also include a non-volatile memory, such as at least one disk storage device, flash memory device, or other non-volatile solid-state storage devices. Accordingly, the memory may further include a memory controller to provide accessing to the memory by the processor. The processor may be a central processing unit, or may be other general processors, digital signal processors, application-specific integrated circuits, or other programmable logic devices, discrete gates or transistor logic devices, discrete hardware components, etc. A general processor may be a microprocessor, or the processor may also be any conventional processor, etc.

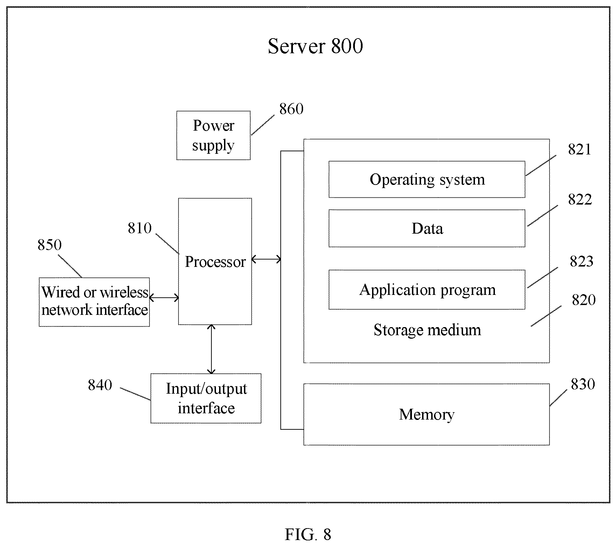

The method embodiments provided in embodiments of the present invention may be executed in a computer terminal, a server, or a computing apparatus similarly. Taking running on a server as an example, FIG. 8 is a schematic diagram of a hardware structure of a server running a path planning method provided in an embodiment of the present invention. As shown in FIG. 8, a server 800, with a relatively large difference due to different configurations or performance, may include one or more processors 810 (Central Processing Units, CPUs) (the processor 810 may include, but is not limited to, a processing apparatus such as a microprocessor MCU (Microcontroller Unit) or a programmable logic device FPGA (Field Programmable Gate Array)), a memory 830 for storing data, and one or more storage mediums 820 (such as one or more mass storage devices) for storing an application program 823 or data 822. The memory 830 and the storage medium 820 may be transient storage or persistent storage. The program stored in the storage medium 820 may include one or more modules, and each module may include a series of instruction operations on the server. Further, the processor 810 may be configured to communicate with the storage medium 820, and execute the series of instruction operations in the storage medium 820 on the server 800. The server 800 may further include one or more power supplies 860, one or more wired or wireless network interfaces 850, one or more input/output interfaces 840, and/or one or more operating systems 821, such as Windows Server™, Mac OS X™, Unix™, Linux™, FreeBSD™, etc.

The input/output interface 840 may be configured to receive or transmit data via a network. A specific example of the network described above may include a wireless network provided by a communication provider of the server 800. In an example, the input/output interface 840 includes a network adapter (Network Interface Controller, NIC), which can be connected to other network devices through a base station so as to communicate with the Internet. In an example, the input/output interface 840 may be a radio frequency (RF) module configured to communicate with the Internet in a wireless manner.

A person of ordinary skill in the art can understand that the structure shown in FIG. 8 is merely illustrative, and does not limit the structure of the electronic device mentioned above. For example, the server 800 may also include more or fewer components than those shown in FIG. 8, or have a different configuration from that shown in FIG. 8.

An embodiment of the present invention further provides a computer-readable storage medium, where at least one instruction or at least one program is stored in the computer-readable storage medium, and the at least one instruction or the at least one program is loaded and executed by a processor to implement the steps of the path planning method mentioned above. In an embodiment of the present invention, the computer program includes computer program code, and the computer program code may be in source code form, object code form, executable file or some intermediate forms, etc. The computer-readable storage medium may include: any entity or apparatus, recording medium, U disk, mobile hard disk, magnetic disk, optical disk, computer memory, read-only memory, random access memory, electrical carrier signal, telecommunication signal, software distribution medium, and/or the like, which is capable of carrying the computer program code.

An embodiment of the present invention further provides a computer storage medium, where at least one instruction or at least one program is stored in the computer storage medium, and the at least one instruction or the at least one program is loaded and executed by a processor to implement the steps of the path planning method mentioned above. In an embodiment of the present invention, the computer program includes computer program code, and the computer program code may be in source code form, object code form, executable file or some intermediate forms, etc. The computer storage medium may include: any entity or apparatus, recording medium, U disk, mobile hard disk, magnetic disk, optical disk, computer memory, read-only memory, random access memory, electrical carrier signal, telecommunication signal, software distribution medium, and/or the like, which is capable of carrying the computer program code.

An embodiment of the present invention further provides a computer program product or computer program, where the computer program product or computer program includes computer instructions, and the computer instructions are stored in a computer-readable storage medium. A processor of a computer device reads the computer instructions from the computer-readable storage medium, and the processor executes the computer instructions to cause the computer device to execute the path planning method provided in various optional implementations mentioned above.

**Claims**

1. A path planning method, comprising:

    projecting (S301) information on lane lines, information on a lane center-line and information on an obstacle contour into a target coordinate system to obtain projection information;
    determining (S302) a start point and an end point of path planning in the target coordinate system, and if it is determined based on the projection information that there is an obstacle between the start point and the end point, then performing sampling on both sides of the obstacle contour along a travelling direction of a vehicle to obtain sampling points;
    determining (S303) a plurality of paths based on the start point, the end point and the sampling points;
    performing (S304) a cost calculation on the plurality of paths, and determining a reference path in the plurality of paths based on results of the cost calculation, wherein the results of the cost calculation characterize degrees to which the paths are close to the lane center-line in a case of avoiding the obstacle; and
    determining (S305) a target planned path based on the reference path;
    wherein performing (S304) the cost calculation on the plurality of paths, and determining the reference path in the plurality of paths based on the results of the cost calculation comprise:

        for each path of the plurality of paths, determining a first distance between a point on the path and the lane center-line, and a second distance between the point on the path and the obstacle contour, and determining a result of the cost calculation corresponding to the path according to the first distance, the second distance and a smooth-property value of the path; and
        comparing the results of the cost calculation corresponding to the paths, and determining a path of which the result of the cost calculation is minimal as the reference path;

wherein determining the result of the cost calculation corresponding to the path according to the first distance, the second distance and the smooth-property value of the path comprises:

for each point on the path, obtaining a first calculation result based on a product of the first distance corresponding to the point and a first coefficient, and obtaining a second calculation result based on a product of the second distance corresponding to the point and a second coefficient;

performing a linear fusion based on the first coefficient and the second coefficient to obtain a third coefficient, and obtaining a third calculation result based on a product of the smooth-property value of the path and the third coefficient;

summing the first calculation result, the second calculation result and the third calculation result corresponding to each point on the path to obtain a first summing result; and

adjusting the first coefficient and the second coefficient based on the first summing result, and in a case that the second distance between each point on the path and the obstacle contour is not less than a safety distance, determining the result of the cost calculation corresponding to the path.

2. The path planning method according to claim 1, wherein performing the sampling on both sides of the obstacle contour along the travelling direction of the vehicle to obtain the sampling points comprises:

determining a sampling distance on both sides of the obstacle contour along the travelling direction of the vehicle, wherein the sampling distance is a sum of half a width of the vehicle and a safety distance, and the safety distance is a preset distance between the vehicle and the obstacle contour; and

performing sampling based on the sampling distance to obtain the sampling points.

3. The path planning method according to claim 2, wherein the sampling points comprise a valid sampling point and an invalid sampling point, wherein the valid sampling point is located within the lane lines, and the invalid sampling point is located outside the lane lines.

4. The path planning method according to claim 3, further comprising:

if all the sampling points are invalid sampling points, then taking a point of intersection between a lower boundary of the obstacle contour and the lane center-line as a final sampling point; and

taking the final sampling point as the end point.

5. The path planning method according to claim 1, further comprising:

if it is determined based on the projection information that there is no obstacle between the start point and the end point, then determining the lane center-line as the reference path.

6. A path planning apparatus, comprising:

a projecting module (701), configured to project information on lane lines, information on a lane center-line and information on an obstacle contour into a target coordinate system to obtain projection information;

a sampling module (702), configured to determine a start point and an end point of path planning in the target coordinate system, and if it is determined based on the projection information that there is an obstacle between the start point and the end point, then perform sampling on both sides of the obstacle contour along a travelling direction of a vehicle to obtain sampling points;

a planning module (703), configured to determine a plurality of paths based on the start point, the end point and the sampling points;

a cost calculating module (704), configured to perform a cost calculation on the plurality of paths, and determine a reference path in the plurality of paths based on results of the cost calculation, wherein the results of the cost calculation characterize degrees to which the paths are close to the lane center-line in a case of avoiding the obstacle; and

an optimizing module (705), configured to determine a target planned path based on the reference path;

wherein the cost calculating module (704) comprises:

a parameter determining module, configured to: for each path of the plurality of paths, determine a first distance between a point on the path and the lane center-line, and a second distance between the point on the path and the obstacle contour;

a calculating module, configured to: for each path of the plurality of paths, determine a result of the cost calculation corresponding to the path according to the first distance, the second distance and a smooth-property value of the path; and

a reference-path determining module, configured to compare the results of the cost calculation corresponding to the paths, and determine a path of which the result of the cost calculation is minimal as the reference path;

wherein the calculating module comprises:

a first calculating unit, configured to: for each point on the path, obtain a first calculation result based on a product of the first distance corresponding to the point and a first coefficient, and obtain a second calculation result based on a product of the second distance corresponding to the point and a second coefficient;

a second calculating unit, configured to perform a linear fusion based on the first coefficient and the second coefficient to obtain a third coefficient, and obtain a third calculation result based on a product of the smooth-property value of the path and the third coefficient;

a third calculating unit, configured to sum the first calculation result, the second calculation result and the third calculation result corresponding to each point on the path to obtain a first summing result; and

an adjusting unit, configured to adjust the first coefficient and the second coefficient based on the first summing result, and in a case that the second distance between each point on the path and the obstacle contour is not less than a safety distance, determine the result of the cost calculation corresponding to the path.

7. The path planning apparatus according to claim 6, wherein the sampling module (702) comprises:

a sampling-distance determining unit, configured to determine a sampling distance on both sides of the obstacle contour along the travelling direction of the vehicle, wherein the sampling distance is a sum of half a width of the vehicle and a safety distance, and the safety distance is a preset distance between the vehicle and the obstacle contour; and

a sampling unit, configured to perform sampling based on the sampling distance to obtain the sampling points.

8. The path planning apparatus according to claim 7, wherein the sampling points comprise a valid sampling point and an invalid sampling point, wherein the valid sampling point is located within the lane lines, and the invalid sampling point is located outside the lane lines.

9. The path planning apparatus according to claim 8, wherein the sampling module (702) is configured to:

if all the sampling points are invalid sampling points, then take a point of intersection between a lower boundary of the obstacle contour and the lane center-line as a final sampling point; and

take the final sampling point as the end point.

10. A computer-readable storage medium, wherein at least one instruction or at least one program is stored in the computer-readable storage medium, and the at least one instruction or the at least one program is loaded and executed by a processor to implement the steps of the method according to any one of claims 1 to 5.

**Patentansprüche**

1. Wegplanungsverfahren, umfassend:

Projizieren (S301) von Informationen über Fahrspurlinien, Informationen über eine Fahrspurmittellinie und Informationen über eine Hinderniskontur in ein Zielkoordinatensystem, um Projektionsinformationen zu erhalten;

Bestimmen (S302) eines Startpunktes und eines Endpunktes einer Wegplanung in dem Zielkoordinatensystem und, wenn basierend auf den Projektionsinformationen bestimmt wird, dass es ein Hindernis zwischen dem Startpunkt und dem Endpunkt gibt, dann Durchführen einer Abtastung auf beiden Seiten der Hinderniskontur entlang einer Fahrtrichtung eines Fahrzeugs, um Abtastpunkte zu erhalten;

Bestimmen (S303) einer Vielzahl von Wegen basierend auf dem Startpunkt, dem Endpunkt und den Abtastpunkten;

Durchführen (S304) einer Kostenberechnung für die Vielzahl von Wegen und Bestimmen eines Referenzweges in der Vielzahl von Wegen basierend auf Ergebnissen der Kostenberechnung, wobei die Ergebnisse der Kostenberechnung Grade, in denen die Wege im Falle einer Hindernisvermeidung nahe an der Fahrspurmittellinie liegen, charakterisieren; und

Bestimmen (S305) eines geplanten Zielweges basierend auf dem Referenzweg;

wobei das Durchführen (S304) der Kostenberechnung für die Vielzahl von Wegen und das Bestimmen des Referenzweges in der Vielzahl von Wegen basierend auf den Ergebnissen der Kostenberechnung Folgendes umfassen:

für jeden Weg der Vielzahl von Wegen, Bestimmen einer ersten Entfernung zwischen einem Punkt auf dem Weg und der Fahrspurmittellinie und einer zweiten Entfernung zwischen dem Punkt auf dem Weg und der Hinderniskontur, und Bestimmen eines Ergebnisses der Kostenberechnung entsprechend dem Weg gemäß der ersten Entfernung, der zweiten Entfernung und einem glatten Eigenschaftswert des Weges; und

Vergleichen der Ergebnisse der Kostenberechnung entsprechend den Wegen und Bestimmen eines Weges, dessen Ergebnis der Kostenberechnung minimal ist, als den Referenzweg;

wobei das Bestimmen des Ergebnisses der Kostenberechnung entsprechend dem Weg gemäß der ersten Entfernung, der zweiten Entfernung und dem glatten Eigenschaftswert des Weges Folgendes umfasst:

für jeden Punkt auf dem Weg, Erhalten eines ersten Berechnungsergebnisses basierend auf einem Produkt aus der ersten Entfernung, die dem Punkt entspricht, und einem ersten Koeffizienten und Erhalten eines zweiten Berechnungsergebnisses basierend auf einem Produkt aus der zweiten Entfernung, die dem Punkt entspricht, und einem zweiten Koeffizienten;

Durchführen einer linearen Fusion basierend auf dem ersten Koeffizienten und dem zweiten Koeffizienten, um einen dritten Koeffizienten zu erhalten, und Erhalten eines dritten Berechnungsergebnisses basierend auf einem Produkt aus dem glatten Eigenschaftswert des Weges und dem dritten Koeffizienten;

Summieren des ersten Berechnungsergebnisses, des zweiten Berechnungsergebnisses und des dritten Berechnungsergebnisses, die jedem Punkt auf dem Weg entsprechen, um ein erstes Summenergebnis zu erhalten; und

Anpassen des ersten Koeffizienten und des zweiten Koeffizienten basierend auf dem ersten Summenergebnis, und in einem Fall, bei dem die zweite Entfernung zwischen jedem Punkt auf dem Weg und die Hinderniskontur nicht kleiner ist als eine Sicherheitsentfernung, Bestimmen des Ergebnisses der Kostenberechnung entsprechend dem Weg.

2. Wegplanungsverfahren nach Anspruch 1, wobei das Durchführen der Abtastung auf beiden Seiten der Hinderniskontur entlang der Fahrtrichtung des Fahrzeugs, um die Abtastpunkte zu erhalten, Folgendes umfasst:

Bestimmen einer Abtastentfernung auf beiden Seiten der Hinderniskontur entlang der Fahrtrichtung des Fahrzeugs, wobei die Abtastentfernung eine Summe aus einer halben Breite des Fahrzeugs und einer Sicherheitsentfernung ist und die Sicherheitsentfernung eine voreingestellte Entfernung zwischen dem Fahrzeug und der Hinderniskontur ist; und

Durchführen einer Abtastung basierend auf der Abtastentfernung, um Abtastpunkte zu erhalten.

3. Wegplanungsverfahren nach Anspruch 2, wobei die Abtastpunkte einen gültigen Abtastpunkt und einen ungültigen Abtastpunkt umfassen, wobei sich der gültige Abtastpunkt innerhalb der Fahrspurlinien befindet und sich der ungültige Abtastpunkt außerhalb der Fahrspurlinien befindet.

4. Wegplanungsverfahren nach Anspruch 3, ferner umfassend:

wenn sämtliche Abtastpunkte ungültige Abtastpunkte sind, dann Nehmen eines Schnittpunkts zwischen einer unteren Begrenzung der Hinderniskontur und der Fahrspurmittellinie als einen endgültigen Abtastpunkt; und Nehmen des endgültigen Abtastpunktes als den Endpunkt.

5. Wegplanungsverfahren nach Anspruch 1, ferner umfassend:
wenn basierend auf den Projektionsinformationen bestimmt wird, dass es kein Hindernis zwischen dem Startpunkt und dem Endpunkt gibt, dann Bestimmen der Fahrspurmittellinie als den Referenzweg.

6. Wegplanungsvorrichtung, umfassend:

ein Projektionsmodul (701), das dazu konfiguriert ist, Informationen über Fahrspurlinien, Informationen über eine Fahrspurmittellinie und Informationen über eine Hinderniskontur in ein Zielkoordinatensystem zu projizieren, um Projektionsinformationen zu erhalten;

ein Abtastmodul (702), das dazu konfiguriert ist, einen Startpunkt und einen Endpunkt einer Wegplanung in dem Zielkoordinatensystem zu bestimmen und, wenn basierend auf den Projektionsinformationen bestimmt wird, dass es ein Hindernis zwischen dem Startpunkt und dem Endpunkt gibt, dann eine Abtastung auf beiden Seiten der Hinderniskontur entlang einer Fahrtrichtung eines Fahrzeugs durchzuführen, um Abtastpunkte zu erhalten;

ein Planungsmodul (703), das dazu konfiguriert ist, eine Vielzahl von Wegen basierend auf dem Startpunkt, dem Endpunkt und den Abtastpunkten zu bestimmen;

ein Kostenberechnungsmodul (704), das dazu konfiguriert ist, eine Kostenberechnung für die Vielzahl von Wegen durchzuführen und einen Referenzweg in der Vielzahl von Wegen basierend auf Ergebnissen der Kostenberechnung zu bestimmen, wobei die Ergebnisse der Kostenberechnung Grade, in denen die Wege im Falle einer Hindernisvermeidung nahe an der Fahrspurmittellinie liegen, charakterisieren; und

ein Optimierungsmodul (705), das dazu konfiguriert ist, einen geplanten Zielweg basierend auf dem Referenzweg zu bestimmen;

wobei das Kostenberechnungsmodul (704) Folgendes umfasst:

ein Parameterbestimmungsmodul, das dazu konfiguriert ist: für jeden Weg der Vielzahl von Wegen, eine erste Entfernung zwischen einem Punkt auf dem Weg und der Fahrspurmittellinie und eine zweite Entfernung zwischen dem Punkt auf dem Weg und der Hinderniskontur zu bestimmen;

ein Berechnungsmodul, das dazu konfiguriert ist: für jeden Weg der Vielzahl von Wegen, ein Ergebnis der Kostenberechnung entsprechend dem Weg gemäß der ersten Entfernung, der zweiten Entfernung und einem glatten Eigenschaftswert des Weges zu bestimmen; und

ein Referenzwegbestimmungsmodul, das dazu konfiguriert ist, die Ergebnisse der Kostenberechnung entsprechend den Wegen zu vergleichen und einen Weg, dessen Ergebnis der Kostenberechnung minimal ist, als den Referenzweg zu bestimmen;

wobei das Berechnungsmodul Folgendes umfasst:

eine erste Berechnungseinheit, die dazu konfiguriert ist: für jeden Punkt auf dem Weg, ein erstes Berechnungsergebnis basierend auf einem Produkt aus der ersten Entfernung, die dem Punkt entspricht, und einem ersten Koeffizienten zu erhalten, und ein zweites Berechnungsergebnis basierend auf einem Produkt aus der zweiten Entfernung, die dem Punkt entspricht, und einem zweiten Koeffizienten zu erhalten;

eine zweite Berechnungseinheit, die dazu konfiguriert ist, eine lineare Fusion basierend auf dem ersten Koeffizienten und dem zweiten Koeffizienten durchzuführen, um einen dritten Koeffizienten zu erhalten, und um ein drittes Berechnungsergebnis basierend auf einem Produkt aus dem glatten Eigenschaftswert des Weges und dem dritten Koeffizienten zu erhalten;

eine dritte Berechnungseinheit, die dazu konfiguriert ist, das erste Berechnungsergebnis, das zweite Berechnungsergebnis und das dritte Berechnungsergebnis entsprechend jedem Punkt auf dem Weg zu summieren, um ein erstes Summenergebnis zu erhalten; und

eine Anpassungseinheit, die dazu konfiguriert ist, den ersten Koeffizienten und den zweiten Koeffizienten basierend auf dem ersten Summenergebnis anzupassen, und in einem Fall, bei dem die zweite Entfernung zwischen jedem Punkt auf dem Weg und der Hinderniskontur nicht kleiner ist als eine Sicherheitsentfernung, das Ergebnis der Kostenberechnung entsprechend dem Weg zu bestimmen.

7. Wegplanungsvorrichtung nach Anspruch 6, wobei das Abtastmodul (702) Folgendes umfasst:

eine Abtastentfernungsbestimmungseinheit, die dazu konfiguriert ist, eine Abtastentfernung auf beiden Seiten der Hinderniskontur entlang der Fahrtrichtung des Fahrzeugs zu bestimmen, wobei die Abtastentfernung eine Summe aus einer halben Breite des Fahrzeugs und einer Sicherheitsentfernung ist und die Sicherheitsentfernung eine voreingestellte Entfernung zwischen dem Fahrzeug und der Hinderniskontur ist; und

eine Abtasteinheit, die dazu konfiguriert ist, eine Abtastung basierend auf der Abtastentfernung durchzuführen, um die Abtastpunkte zu erhalten.

8. Wegplanungsvorrichtung nach Anspruch 7, wobei die Abtastpunkte einen gültigen Abtastpunkt und einen ungültigen Abtastpunkt umfassen, wobei sich der gültige Abtastpunkt innerhalb der Fahrspurlinien befindet und sich der ungültige Abtastpunkt außerhalb der Fahrspurlinien befindet.

9. Wegplanungsvorrichtung nach Anspruch 8, wobei das Abtastmodul (702) dazu konfiguriert ist:

   wenn sämtliche Abtastpunkte ungültige Abtastpunkte sind, dann einen Schnittpunkt zwischen einer unteren Begrenzung der Hinderniskontur und der Fahrspurmittellinie als einen endgültigen Abtastpunkt zu nehmen; und den endgültigen Abtastpunkt als den Endpunkt zu nehmen.

10. Computerlesbares Speichermedium, wobei mindestens eine Anweisung oder mindestens ein Programm auf dem computerlesbaren Speichermedium gespeichert ist und die mindestens eine Anweisung oder das mindestens eine Programm durch einen Prozessor geladen und ausgeführt wird, um die Schritte des Verfahrens nach einem der Ansprüche 1 bis 5 umzusetzen.


**Revendications**

1. Procédé de planification de trajet, comprenant :

   la projection (S301) d'informations sur des lignes de voie, d'informations sur une ligne médiane de voie et d'informations sur un contour d'obstacle dans un système de coordonnées cible pour obtenir des informations de projection ;
   la détermination (S302) d'un point de départ et d'un point d'arrivée de planification de trajet dans le système de coordonnées cible, et s'il est déterminé sur la base des informations de projection qu'il existe un obstacle entre le point de départ et le point d'arrivée, alors la réalisation d'un échantillonnage sur les deux côtés du contour d'obstacle le long d'une direction de déplacement d'un véhicule pour obtenir des points d'échantillonnage ;
   la détermination (S303) d'une pluralité de trajets sur la base du point de départ, du point d'arrivée et des points d'échantillonnage ;
   la réalisation (S304) d'un calcul de coût sur la pluralité de trajets, et la détermination d'un trajet de référence dans la pluralité de trajets sur la base de résultats du calcul de coût, dans lequel les résultats du calcul de coût caractérisent des degrés auxquels les trajets sont proches de la ligne médiane de voie dans un cas d'évitement de l'obstacle ; et
   la détermination (S305) d'un trajet planifié cible sur la base du trajet de référence ;
   dans lequel la réalisation (S304) du calcul de coût sur la pluralité de trajets, et la détermination du trajet de référence dans la pluralité de trajets sur la base des résultats du calcul de coût comprennent :

      pour chaque trajet de la pluralité de trajets, la détermination d'une première distance entre un point sur le trajet et la ligne médiane de voie, et d'une deuxième distance entre le point sur le trajet et le contour d'obstacle, et la détermination d'un résultat du calcul de coût correspondant au trajet selon la première distance, la deuxième distance et une valeur de propriété de lissage du trajet ; et
      la comparaison des résultats du calcul de coût correspondant aux trajets, et la détermination d'un trajet dont le résultat du calcul de coût est minimal en tant que trajet de référence ;
      dans lequel la détermination du résultat du calcul de coût correspondant au trajet selon la première distance, la deuxième distance et la valeur de propriété de lissage du trajet comprend :

         pour chaque point sur le trajet, l'obtention d'un premier résultat de calcul basé sur un produit de la première distance correspondant au point et d'un premier coefficient, et l'obtention d'un deuxième résultat de calcul basé sur un produit de la deuxième distance correspondant au point et d'un deuxième coefficient ;
         la réalisation d'une fusion linéaire basée sur le premier coefficient et le deuxième coefficient pour obtenir un troisième coefficient, et l'obtention d'un troisième résultat de calcul basé sur un produit de la valeur de propriété de lissage du trajet et du troisième coefficient ;
         la sommation du premier résultat de calcul, du deuxième résultat de calcul et du troisième résultat de calcul correspondant à chaque point sur le trajet pour obtenir un premier résultat de sommation ; et
         l'ajustement du premier coefficient et du deuxième coefficient sur la base du premier résultat de sommation, et dans un cas où la deuxième distance entre chaque point sur le trajet et le contour d'obstacle n'est pas inférieure à une distance de sécurité, la détermination du résultat du calcul de coût correspondant au trajet.

2. Procédé de planification de trajet selon la revendication 1, dans lequel la réalisation de l'échantillonnage sur les deux côtés du contour d'obstacle le long de la direction de déplacement du véhicule pour obtenir les points d'échantillonnage comprend :

la détermination d'une distance d'échantillonnage sur les deux côtés du contour d'obstacle le long de la direction de déplacement du véhicule, dans lequel la distance d'échantillonnage est une somme d'une moitié d'une largeur du véhicule et d'une distance de sécurité, et la distance de sécurité est une distance prédéfinie entre le véhicule et le contour d'obstacle ; et
la réalisation d'un échantillonnage basé sur la distance d'échantillonnage pour obtenir les points d'échantillonnage.

**3.** Procédé de planification de trajet selon la revendication 2, dans lequel les points d'échantillonnage comprennent un point d'échantillonnage valide et un point d'échantillonnage invalide, dans lequel le point d'échantillonnage valide est situé à l'intérieur des lignes de voie, et le point d'échantillonnage invalide est situé à l'extérieur des lignes de voie.

**4.** Procédé de planification de trajet selon la revendication 3, comprenant en outre :

si tous les points d'échantillonnage sont des points d'échantillonnage invalides, alors la prise d'un point d'intersection entre une limite inférieure du contour d'obstacle et la ligne médiane de voie en tant que point d'échantillonnage final ; et
la prise du point d'échantillonnage final en tant que point d'arrivée.

**5.** Procédé de planification de trajet selon la revendication 1, comprenant en outre :

s'il est déterminé sur la base des informations de projection qu'il n'y a pas d'obstacle entre le point de départ et le point d'arrivée, alors la détermination de la ligne médiane de voie en tant que trajet de référence.

**6.** Appareil de planification de trajet, comprenant :

un module de projection (701), configuré pour projeter des informations sur des lignes de voie, des informations sur une ligne médiane de voie et des informations sur un contour d'obstacle dans un système de coordonnées cible pour obtenir des informations de projection ;
un module d'échantillonnage (702), configuré pour déterminer un point de départ et un point d'arrivée de planification de trajet dans le système de coordonnées cible, et s'il est déterminé sur la base des informations de projection qu'il existe un obstacle entre le point de départ et le point d'arrivée, alors réaliser un échantillonnage sur les deux côtés du contour d'obstacle le long d'une direction de déplacement d'un véhicule pour obtenir des points d'échantillonnage ;
un module de planification (703), configuré pour déterminer une pluralité de trajets sur la base du point de départ, du point d'arrivée et des points d'échantillonnage ;
un module de calcul de coût (704), configuré pour réaliser un calcul de coût sur la pluralité de trajets, et déterminer un trajet de référence dans la pluralité de trajets sur la base de résultats du calcul de coût, dans lequel les résultats du calcul de coût caractérisent des degrés auxquels les trajets sont proches de la ligne médiane de voie dans un cas d'évitement de l'obstacle ; et
un module d'optimisation (705), configuré pour déterminer un trajet planifié cible sur la base du trajet de référence ;
dans lequel le module de calcul de coût (704) comprend :

un module de détermination de paramètre, configuré pour : pour chaque trajet de la pluralité de trajets, déterminer une première distance entre un point sur le trajet et la ligne médiane de voie, et une deuxième distance entre le point sur le trajet et le contour d'obstacle ;
un module de calcul, configuré pour : pour chaque trajet de la pluralité de trajets, déterminer un résultat du calcul de coût correspondant au trajet selon la première distance, la deuxième distance et une valeur de propriété de lissage du trajet ; et
un module de détermination de trajet de référence, configuré pour comparer les résultats du calcul de coût correspondant aux trajets, et déterminer un trajet dont le résultat du calcul de coût est minimal en tant que trajet de référence ;

dans lequel le module de calcul comprend :

une première unité de calcul, configurée pour : pour chaque point sur le trajet, obtenir un premier résultat de calcul basé sur un produit de la première distance correspondant au point et d'un premier coefficient, et obtenir un deuxième résultat de calcul basé sur un produit de la deuxième distance correspondant au point et d'un deuxième coefficient ;

une deuxième unité de calcul, configurée pour réaliser une fusion linéaire basée sur le premier coefficient et le deuxième coefficient pour obtenir un troisième coefficient, et obtenir un troisième résultat de calcul basé sur un produit de la valeur de propriété de lissage du trajet et du troisième coefficient ;

une troisième unité de calcul, configurée pour sommer le premier résultat de calcul, le deuxième résultat de calcul et le troisième résultat de calcul correspondant à chaque point sur le trajet pour obtenir un premier résultat de sommation ; et

une unité d'ajustement, configurée pour ajuster le premier coefficient et le deuxième coefficient sur la base du premier résultat de sommation, et dans un cas où la deuxième distance entre chaque point sur le trajet et le contour d'obstacle n'est pas inférieure à une distance de sécurité, déterminer le résultat du calcul de coût correspondant au trajet.

7. Appareil de planification de trajet selon la revendication 6, dans lequel le module d'échantillonnage (702) comprend :

une unité de détermination de distance d'échantillonnage, configurée pour déterminer une distance d'échantillonnage sur les deux côtés du contour d'obstacle le long de la direction de déplacement du véhicule, dans lequel la distance d'échantillonnage est une somme d'une moitié d'une largeur du véhicule et d'une distance de sécurité, et la distance de sécurité est une distance prédéfinie entre le véhicule et le contour d'obstacle ; et

une unité d'échantillonnage, configurée pour réaliser un échantillonnage basé sur la distance d'échantillonnage pour obtenir les points d'échantillonnage.

8. Appareil de planification de trajet selon la revendication 7, dans lequel les points d'échantillonnage comprennent un point d'échantillonnage valide et un point d'échantillonnage invalide, dans lequel le point d'échantillonnage valide est situé à l'intérieur des lignes de voie, et le point d'échantillonnage invalide est situé à l'extérieur des lignes de voie.

9. Appareil de planification de trajet selon la revendication 8, dans lequel le module d'échantillonnage (702) est configuré pour :

si tous les points d'échantillonnage sont des points d'échantillonnage invalides, alors prendre un point d'intersection entre une limite inférieure du contour d'obstacle et la ligne médiane de voie en tant que point d'échantillonnage final ; et

prendre le point d'échantillonnage final en tant que point d'arrivée.

10. Support de stockage lisible par ordinateur, dans lequel l'au moins une instruction ou l'au moins un programme est stocké dans le support de stockage lisible par ordinateur, et l'au moins une instruction ou l'au moins un programme est chargé et exécuté par un processeur pour réaliser les étapes du procédé selon l'une quelconque des revendications 1 à 5.

FIG. 1

FIG. 2

Projecting information on lane lines, information on a lane center-line and information on an obstacle contour into a target coordinate system to obtain projection information — S301

Determining a start point and an end point of path planning in the target coordinate system, and if it is determined based on the projection information that there is an obstacle between the start point and the end point, then performing sampling on both sides of the obstacle contour along a travelling direction of the vehicle to obtain sampling points — S302

Determining a plurality of paths based on the start point, the end point and the sampling points — S303

Performing a cost calculation on the plurality of paths, and determining a reference path in the plurality of paths based on results of the cost calculation, where the results of the cost calculation characterize degrees to which the paths are close to the lane center-line in a case of avoiding the obstacle — S304

Determining a target planned path based on the reference path — S305

FIG. 3

FIG. 4

FIG. 5

FIG. 6

Path planning apparatus

Projecting module 701

Sampling module 702

Planning module 703

Cost calculating module 704

Optimizing module 705

FIG. 7

Server 800

Power
supply                    860

810                         821
Operating system

850                         822
Data
Processor

Wired or wireless          823
network interface    Application program

820
Storage medium

840                         830
Input/output
interface            Memory

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113124891 A

- US 2020385017 A1